# EUROPEAN PATENT APPLICATION

(11) **EP 4 685 664 A1**
(43) Date of publication of application: **28.01.2026**
(21) Application number: 24191003.3
(22) Date of filing: 25.07.2024
(51) Int. Cl.: G06F 16/33, G06F 16/9032

(54) **MEASUREMENT APPLICATION CONTROL UNIT, MEASUREMENT SYSTEM, METHOD**

(71) Applicant: Rohde & Schwarz GmbH & Co. KG, 81671 München (DE)
(72) Inventor: SCHAEFER, Andrew, 82041 Oberhaching (DE)
(74) Representative: Kehl, Ascherl, Liebhoff & Ettmayr Patentanwälte Partnerschaft mbB

(57) **Abstract**

The present disclosure provides a measurement application control unit for measurement applications comprising a main database interface configured to couple to a main database, wherein the main database is configured to store general knowledge data regarding the measurement applications, a secondary database interface configured to couple to at least one secondary database, wherein the at least one secondary database is configured to store specific knowledge data regarding the measurement applications, a text-based input interface configured to receive a text-based user request regarding a measurement application to be executed, a request processor coupled to the main database, the at least one secondary database, and the text-based input interface, wherein the request processor is configured to retrieve and output database entries from the main database and the at least one secondary database that comprise a similarity to the text-based user request that is above a predetermined threshold.

## Description

### TECHNICAL FIELD

The disclosure relates to a measurement application control unit, a measurement system, and a respective method.

### BACKGROUND

Although applicable to any type of measurement application, the present disclosure will mainly be described in conjunction with measurement application devices, like oscilloscopes.

Modern measurement application devices comprise a plurality of functions that support specific tasks in measurement applications. To this end, the measurement application devices may comprise a plurality of options and configuration parameters that a user may setup for a specific measurement application.

Accordingly, there is a need for simplifying interaction with a measurement application device for users.

### SUMMARY

The above stated problem is solved by the features of the independent claims. It is understood, that independent claims of a claim category may be formed in analogy to the dependent claims of another claim category.

Accordingly, it is provided:
A measurement application control unit for measurement applications comprising a main database interface configured to couple to a main database, wherein the main database is configured to store general knowledge data regarding the measurement applications, a secondary database interface configured to couple to at least one secondary database, wherein the at least one secondary database is configured to store specific knowledge data regarding the measurement applications, a text-based input interface configured to receive a text-based user request regarding a measurement application to be executed, a request processor coupled to the main database interface, the secondary database interface, and the text-based input interface, wherein the request processor is configured to retrieve and output database entries from the main database and the at least one secondary database that comprise a similarity to the text-based user request that is above a predetermined threshold.

Further, it is provided:
A measurement application system comprising a main database configured to store general knowledge data regarding the measurement applications, a secondary database configured to store specific knowledge data regarding the measurement applications, and a measurement application control unit according to the present disclosure, wherein the measurement application control unit is coupled to the main database, and the at least one secondary database.

Further, it is provided:
A computer-implemented method for managing measurement application systems data, the method comprising storing general knowledge data regarding measurement applications, storing specific knowledge data regarding the measurement applications separated from the general knowledge data, receiving a text-based user request regarding a measurement application to be executed, retrieving and outputting database entries out of the general knowledge data and the specific knowledge data that comprise a similarity to the text-based user request that is above a predetermined threshold.

The present disclosure is based on the finding that modern measurement application devices may comprise a large number of user-configurable parameters that may be difficult to memorize and understand for users.

The most important options may be presented prominently on a main screen of the respective measurement application device. However, other options that may be required only for very specific measurement tasks may e.g., be hidden in sub-menus of the user interface of the measurement application device.

Especially, inexperienced users may face difficulties when setting-up a measurement application and configuring the measurement application devices. Inexperienced users may even lack the knowledge about the specific functions of prominently presented configuration options, and especially the existence of such configuration options that are e.g., hidden in sub-menus of the user interface of the measurement application device.

With the growing number of Al-based assistants, users may be supported in configuring measurement applications. General knowledge about the measurement applications may be present at the manufacturers of the measurement application devices for training such Al-based assistants. However, domain-specific or confidential data and knowledge may be present only at the users end, e.g., in a company-internal documentation.

The present disclosure allows combining such domain specific or confidential data with the general data without disclosing the domain-specific or confidential data. The present disclosure to this end, provides the measurement application control unit, a measurement application system, and a respective method.

The measurement application system comprises a main database, and at least one secondary database. The main database stores general knowledge data regarding the measurement applications, while the at least one secondary database stores specific knowledge data regarding the measurement applications.

The main database, and the at least on secondary database in the measurement application system are coupled to a measurement application control unit.

The measurement application control unit comprises a respective main database interface for coupling to the main database, and a secondary database interface for coupling to at least one secondary database. Further, the measurement application control unit receives a text-based user request via a text-based input interface. The text-based user request may refer e.g., to a measurement application to be executed or to general questions about the measurement application system, specific measurement tasks or applications, or measurement application devices.

In the measurement application control unit a request processor is coupled to the main database, the secondary database, and the text-based input interface, and retrieves and outputs database entries from the main database and the at least one secondary database that comprise a similarity to the text-based user request that is above a predetermined threshold.

The text-based input interface may receive text-based user requests from a user. Such text-based user requests may comprise natural language text.

The text-based input interface may be implemented as a data interface that receives the text in a binary form e.g., as ASCII encoded text, or as text encoded in any other character encoding scheme. Such a data interface may be provided as hardware interface e.g., as a network interface, and a program interface, like an API or a callback function, or a combination of both.

The text-based input interface may comprise any other type of interface, like an API, callback functions, shared memory, a web-based UI, a REST-API, a class or interface, like a Python class or Python interface, without being limited to these examples.

The different interfaces provided in the measurement application control unit or any other element of the present disclosure may comprise any kind of wired and wireless communication interfaces, like for example a network communication interface, especially an Ethernet, wireless LAN or WIFI interface, a USB interface, a Bluetooth interface, an NFC interface, a visible or non-visible light-based interface, especially an infrared interface. Further, different interfaces may be combined into a single interface, like a single network interface.

As indicated above, specific knowledge data may be present only at a user end. Further, such specific knowledge data may be confidential, and the user may not want to share this information. In contrast, the general knowledge data may be publicly available. Consequently, a knowledge database for e.g., an Al assistant, may easily access the general knowledge data. This may not easily be possible for the specific knowledge data.

The main database may e.g., be operated by the manufacturer of respective measurement application devices, and the measurement application control unit. Such a main database may be provided as central database e.g., accessible over the internet, or as cloud-based database or service.

The content of the main database may e.g., be created based on least one of manuals regarding measurement application devices, datasheets regarding measurement application devices, application notes regarding measurement application devices, manuals of electronic devices, datasheets of electronic devices, application notes of electronic devices, articles regarding electronic circuits, online forum discussions regarding electronic circuits, and videos regarding electronic circuits.

In contrast, the specific knowledge data may be collected on the user end e.g., based on the user's experience. The user may document such specific knowledge data in any way that seems adequate to him. The user may e.g., operate a respective WIKI, or user text documents or any other means to store the specific knowledge data. The user may especially be interested in keeping the specific knowledge data confidential.

With the teaching of the present disclosure, the user may provide his own, specific knowledge data to the at least one secondary database, and use the specific knowledge data together with the general knowledge data as input to possible Al-based agents or assistants.

In embodiments, the retrieved database entries may e.g., be used for training or fine-tuning an Al-based system, or as data in a RAG-based pipeline of an Al-based assistant or agent, as will be described in more detail below.

In an example, the main database may comprise data or information that is publicly available information on oscilloscopes, and e.g., specific literature on integrating serial busses, or any other data as indicated above. The user may be in the possession of domain specific knowledge on, e.g. electrical control of fans and pumps. Such domain specific knowledge may be provided in the at least one secondary database. An Al-based assistant or agent may then access or be based on the selected database entries and may be, e.g., particularly good at solving tasks within the customers domain, without having to divulge the domain specific knowledge to the manufacturer of the measurement application device or the Al-based assistant.

The present disclosure, consequently, allows users to easily combine a vast amount general knowledge data that a single user could not study, with the specific knowledge data that a user may have collected, while at the same time separating the general knowledge data from the specific knowledge data. Therefore, the present disclosure allows enhancing knowledge management, especially for use in Al-based applications.

The request processor, the main database, the at least one secondary database, and the pre-trained artificial-intelligence algorithm may comprise or may be provided in or as part of at least one of a dedicated processing element e.g., a processing unit, a microcontroller, a field programmable gate array, FPGA, a complex programmable logic device, CPLD, an application specific integrated circuit, ASIC, or the like. A respective program or configuration may be provided to implement the required functionality. The request processor, the main database, the at least one secondary database, and the pre-trained artificial-intelligence algorithm may at least in part also be provided as a non-transitory computer program product comprising computer readable instructions that may be executed by a processing element. In a further embodiment, the request processor, the main database, the at least one secondary database, and the pre-trained artificial-intelligence algorithm may be provided as addition or additional function or method to the firmware or operating system of a processing element that is already present in the respective application as respective computer readable instructions. Such computer readable instructions may be stored in a memory that is coupled to or integrated into the processing element. The processing element may load the computer readable instructions from the memory and execute them. The same applies to any other element, unit or function disclosed herein as part of the measurement application control unit, the measurement application system, and the method.

In addition, it is understood, that any required supporting or additional hardware may be provided like e.g., a power supply circuitry and clock generation circuitry.

Generally, any computer program or computer program product disclosed herein is to be understood as a non-transitory computer program product.

A measurement application device according to the present disclosure may comprise any device that may be used in a measurement application to acquire an input signal or to generate an output signal, or to perform additional or supporting functions in a measurement application. A measurement application device may also comprise or be implemented as program application or program applications, also called measurement program application or measurement program applications, that may be executed on a computer device and that may communicate with other measurement application devices in order to perform a measurement task. A measurement application, also called measurement setup, may e.g., comprise at least one or multiple different measurement application devices for performing electric, magnetic, or electromagnetic measurements, especially on single devices under test. A measurement application device according to the present disclosure may be configured to perform such electric, magnetic, or electromagnetic measurements e.g., in a measurement laboratory or in a production facility in the respective production line on a device under test, DUT. An exemplary measurement application or measurement setup may serve to qualify the single devices under test i.e., to determine the proper electrical operation of the respective devices under test.

Measurement application devices to this end may comprise at least one signal acquisition section for acquiring electric, magnetic, or electromagnetic signals to be measured from a device under test, or at least one signal generation section for generating electric, magnetic, or electromagnetic signals that may be provided to the device under test. Such a signal acquisition section may comprise, but is not limited to, a front-end for acquiring, filtering, and attenuating or amplifying electrical signals. The signal generation section may comprise, but is not limited to, respective signal generators, amplifiers, and filters. In embodiments, the signal acquisition is performed via the signal acquisition section in a wired or contact-based manner or fashion. To this end, a respective measurement probe may be coupled to the measurement application device via a respective cable. In embodiments, the signal generation and emission is performed via the signal generation section in a wired or contact-based manner or fashion. To this end, a respective signal output probe may be coupled to the measurement application device via a respective cable, or the signal may be output directly via the cable e.g., to a device under test.

Further, when acquiring signals, measurement application devices may comprise a signal processing section that may process the acquired signals. Processing may comprise converting the acquired signals from analog to digital signals, and any other type of digital signal processing, for example, converting signals from the time-domain into the frequency-domain.

The measurement application devices may also comprise a user interface to display the acquired signals to a user and allow a user to control the measurement application devices. Of course, a housing may be provided that comprises the elements of the measurement application device. It is understood, that further elements, like power supply circuitry, and communication interfaces may be provided.

A measurement application device may be a stand-alone device that may be operated without any further element in a measurement application to perform tests on a device under test. Of course, communication capabilities may also be provided for the measurement application device to interact with other measurement application devices.

A measurement application device may comprise, for example, a signal acquisition device e.g., an oscilloscope, especially a digital oscilloscope, a spectrum analyzer, or a vector network analyzer. Such a measurement application device may also comprise a signal generation device e.g., a signal generator, especially an arbitrary signal generator, also called arbitrary waveform generator, or a vector signal generator. Further possible measurement application devices comprise devices like calibration standards, or measurement probe tips.

Of course, at least some of the possible functions, like signal acquisition and signal generation, may be combined in a single measurement application device.

In embodiments, the measurement application device may comprise pure data acquisition devices that are capable of acquiring an input signal and of providing the acquired input signal as digital input signal to a respective data storage or application server. Such pure data acquisition devices not necessarily comprise a user interface or display. Instead, such pure data acquisition devices may be controlled remotely e.g., via a respective data interface, like a network interface or a USB interface. The same applies to pure signal generation devices that may generate an output signal without comprising any user interface or configuration input elements. Instead, such signal generation devices may be operated remotely via a data connection.

Further embodiments of the present disclosure are subject of the further dependent claims and of the following description, referring to the drawings.

In the following, the dependent claims referring directly or indirectly to claim 1 are described in more detail. For the avoidance of doubt, the features of the dependent claims relating to independent claim 1 can be combined in all variations with each other and the disclosure of the description is not limited to the claim dependencies as specified in the claim set. Further, the features of the dependent claims referring to independent claim 1 may be combined with any of the features of the other independent claims or the dependent claims relating to any one of the other independent claims. In a respective method, respective method steps may perform the function of the respective apparatus elements, and in a respective apparatus, respective apparatus elements may perform the respective method steps.

In an embodiment, which can be combined with all other embodiments mentioned above or below, the measurement application control unit may further comprise a pre-trained artificial-intelligence algorithm coupled to the request processor. The request processor may be configured to provide the text-based user request, and the retrieved database entries to the pre-trained artificial-intelligence algorithm, and the pre-trained artificial-intelligence algorithm may be configured to generate response data regarding the text-based user request based on the retrieved database entries.

In order to provide the user with helpful responses to the text-based user request, the text-based user request may be provided to the pre-trained artificial-intelligence algorithm that may generate respective response data based on the provided text-based user requests, and the provided database entries.

The pre-trained artificial-intelligence algorithm may, especially, be trained to receive text-based user requests that are formulated in a natural language style e.g., as a user would speak the text-based user requests to other users, or as a user would formulate the text-based user requests e.g., in an online forum.

The pre-trained artificial-intelligence algorithm may comprise a large language model based on at least one of a Bidirectional Encoder Representations from Transformers model, and a Generative Pre-trained Transformer model. While two specific types of large language models are explicitly disclosed, it is understood, that the pre-trained artificial-intelligence algorithm may comprise any algorithm that may be trained on a set of training data such that it may generate the response data based on text-based user requests. Other possible types of algorithms or models include, but are not limited to, any type of language models, like statistical models like N-grams, recurrent neuronal network, like long short term, LSTM, models, and transformer models.

In embodiments, the pre-trained artificial-intelligence algorithm may be provided externally to the measurement application device unit, e.g., as dedicated component of the measurement application system. Such a pre-trained artificial-intelligence algorithm may be provided on a dedicated server that may be coupled to the other elements of the measurement application system via a respective network.

In another embodiment, which can be combined with all other embodiments mentioned above or below, the request processor may be configured to generate a prompt for the pre-trained artificial-intelligence algorithm based on the text-based user request and the retrieved database entries.

A prompt is generally understood as the data that is passed or provided to the pre-trained artificial-intelligence algorithm as input. A text-based user request alone may be used as prompt, if no database entries are identified that match the similarity criterion.

If, however, at least one database entry is retrieved by the request processor, the request processor may combine the content of the retrieved database with the text-based user request into a respective prompt and provide said prompt to the pre-trained artificial-intelligence algorithm.

Augmenting a text-based user request with additional information from e.g., the database entries, may be referred to as Retrieval Augmented Generation, RAG, for the pre-trained artificial-intelligence algorithm. The measurement application control unit may, therefore, implement a kind of RAG-pipeline.

In a further embodiment, which can be combined with all other embodiments mentioned above or below, the request processor may be configured to retrieve a predetermined number of database entries. When retrieving the predetermined number of database entries, the request processor may retrieve as many database entries as possible from the at least one secondary database, and only retrieve database entries from the main database if less than the predetermined number of database entries is retrieved from the at least one secondary database. Alternatively, the request processor may equally retrieve database entries from the main database, and the at least one secondary database. As further alternative, the request processor may retrieve a predetermined first number of database entries from the at least one secondary database, and a predetermined second number of database entries from the main database.

As indicated above, the request processor may retrieve the database entries with different priorities.

In embodiments, the request processor may retrieve as many database entries as allowed by the similarity criterion from the at least one secondary database, and only retrieve further database entries from the main database if less than the predetermined number of database entries is retrieved from the at least one secondary database. In this mode of operation of the request processor, the domain specific or confidential data from the at least one secondary database is preferred over the general data from the main database.

In embodiments, the request processor may equally retrieve database entries from the main database, and the at least one secondary database. In this mode of operation, the request processor may try to retrieve basically the same number of database entries from the main database and the at least one secondary database. It is understood, that to achieve the desired number of database entries, the request processor may retrieve more database entries from the main database, or the at least one secondary database, if the other database does not contain enough database entries that fulfill the similarity criterion.

In embodiments, the request processor may retrieve a predetermined first number of database entries from the at least one secondary database, and a predetermined second number of database entries from the main database. This allows explicitly defining the weight that the data from the at least one secondary database and the data from the main database has for the final prompt. It is understood, that to achieve the desired number of database entries, the request processor may retrieve more database entries from the main database, or the at least one secondary database, if the other database does not contain enough database entries that fulfill the similarity criterion.

In another embodiment, which can be combined with all other embodiments mentioned above or below, the request processor may be configured to lower the predetermined threshold and repeat the retrieval of database entries if no database entries are retrieved for a predetermined value of the threshold.

In case that no database entries that match the similarity criterion may be identified in the main database, or the at least one secondary database, the predetermine threshold for the similarity determination may be lowered. In case of an Euclidean distance as similarity measure, the maximum allowed distance value may e.g., be increased.

In a further embodiment, which can be combined with all other embodiments mentioned above or below, the request processor may further be configured to decrypt the database entries retrieved from the at least one secondary database. The request processor may to this end comprise a dedicated cryptography module or cryptography chip or element that may perform or support the decryption in hardware. Such a module may also be called a trusted platform module.

The database entries in the at least one secondary database may be encrypted. Depending on the type of database, only part of the database entry may be encrypted. For example, if a vector database is used as the at least one secondary database, only the actual content of the respective database entry may be encrypted, while the vector information may be unencrypted. This allows including the vectors regarding the specific knowledge data in a secondary database with unrestricted access or that grants access to a wider audience even if password protected, while the specific content of the specific knowledge data is not made publicly available. The specific knowledge data may only be used in a request processor that is equipped with the respective knowledge for decrypting the encrypted data.

This arrangement allows a manufacturer of measurement application devices to provide the at least one secondary database as a hosted or cloud service to customers. The customers of the manufacturer may for example upload their domain specific or confidential data to such a service and encrypt this data with a specific encryption method or key. The customers may provide the respective decryption key to their measurement application control units, which may then access the respective data.

Of course, such a hosted or cloud-based at least one secondary database may further use user-based access management to restrict access to the customer-provided data to only the customer that provided his own data.

In further embodiments, different customers may also share their credentials for accessing encrypted data. This allows a community to build around the domain specific or confidential data that exchanges knowledge that may then be used by the respective artificial intelligence agents of the different customers. At the same time, only users that are accepted by the community will be granted access.

In another embodiment, which can be combined with all other embodiments mentioned above or below, the main database, and the at least one secondary database may each comprise a vector database.

When vector databases are used in the main database, and the at least one secondary database, each data entry is represented by a respective vector. The vectorization of the data is also called embedding, and is not specified in detail here. It is understood, that any adequate method for vectorizing or embedding the data may be used. For example, respective trained artificial intelligence models may be used.

The similarity between the database entries and the text-based user request may in such embodiments be determined by also vectorizing or embedding the text-based user request, and determining the Euclidean distance between the vector(s) resulting from the text-based user request, and the database entries. The predetermined threshold may comprise e.g., a maximum value for the Euclidean distance.

In a further embodiment, which can be combined with all other embodiments mentioned above or below, the measurement application system may comprise a private network segment, and a public network segment that is coupled to the private network segment. The at least one secondary database, and the measurement application control unit may be arranged in the private network segment, and the main database may be arranged in the public network segment.

Partitioning the network architecture underlying the measurement application system allows separating data and elements of the measurement application system as required by the confidentiality of the respective data.

The private network segment may e.g., be a local area network, that may be coupled via a respective gateway or firewall to the public network segment e.g., the internet. The local area network may e.g., comprise a company or laboratory network that may only be accessed by authorized users. The public network segment being the internet, allows access to the main database to any user with the respective user credentials.

In embodiments, the private network segment may itself may comprise different segments or locations that may be coupled into a single private network segment e.g., by VPN connections. This allows a manufacturer of a measurement application device to provide the at least one secondary database as hosted service, while at the same time providing confidentiality for the data stored in the databases.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a block diagram of an embodiment of a measurement application control unit according to the present disclosure;
Figure 2 shows a block diagram of another embodiment of a measurement application control unit according to the present disclosure;
Figure 3 shows a block diagram of another embodiment of a measurement application control unit according to the present disclosure;
Figure 4 shows a block diagram of an embodiment of a measurement application system according to the present disclosure;
Figure 5 shows a block diagram of another embodiment of a measurement application system according to the present disclosure;
Figure 6 shows a flow diagram of an embodiment of a method according to the present disclosure;
Figure 7 shows a block diagram of an embodiment of a measurement application device that may be used with an embodiment of the measurement application control unit, the measurement application system, or the method according to the present disclosure; and
Figure 8 shows a block diagram of another embodiment of a measurement application device that may be used with an embodiment of the measurement application control unit, the measurement application system, or the method according to the present disclosure.

In the figures like reference signs denote like elements unless stated otherwise.

### DETAILED DESCRIPTION OF THE DRAWINGS

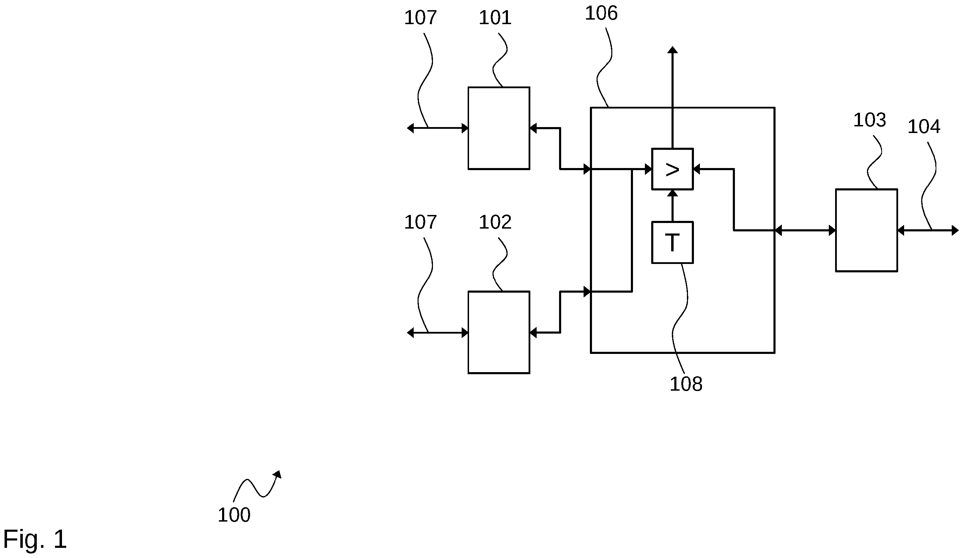

Figure 1 shows a measurement application control unit 100. The measurement application control unit 100 comprises a main database interface 101, a secondary database interface 102, and a text-based input interface 103. The main database interface 101, the secondary database interface 102, and the text-based input interface 103 are each coupled to a request processor 106. The main database interface 101 may couple to a main database that stores general knowledge data regarding the measurement applications. The secondary database interface 102 may couple to at least one secondary database that stores specific knowledge data regarding the measurement applications. The explanations provided herein for any one of the embodiments of the measurement application control unit also apply mutatis mutandis to the measurement application control unit 100.

The text-based input interface 103 receives a text-based user request 104 regarding any type of measurement application related inquiry. The text-based user request 104 may be answered e.g., by an Al-based assistant.

The request processor 106 then retrieves and outputs database entries 107 from the main database and the at least one secondary database that comprise a similarity to the text-based user request 104 that is above a predetermined threshold 108.

By combining the database entries 107 from the main database, and the at least one secondary database, the base information for generating an answer by an Al-based assistant is greatly improved.

The request processor 106 may retrieve a predetermined number of database entries 107. When retrieving the predetermined number of database entries 107, the request processor 106 may retrieve as many database entries 107 as possible from the at least one secondary database, and only retrieve database entries 107 from the main database if less than the predetermined number of database entries 107 is retrieved from the at least one secondary database. Alternatively, the request processor 106 may equally retrieve database entries 107 from the main database, and the at least one secondary database. Alternatively, the request processor 106 may retrieve a predetermined first number of database entries 107 from the at least one secondary database, and a predetermined second number of database entries 107 from the main database.

The request processor 106 may lower the predetermined threshold 108 and repeat the retrieval of database entries 107 if no database entries 107 are retrieved for a predetermined value of the threshold 108.

The request processor 106 may also decrypt the database entries 107 retrieved from the at least one secondary database, if these are provided in encrypted form.

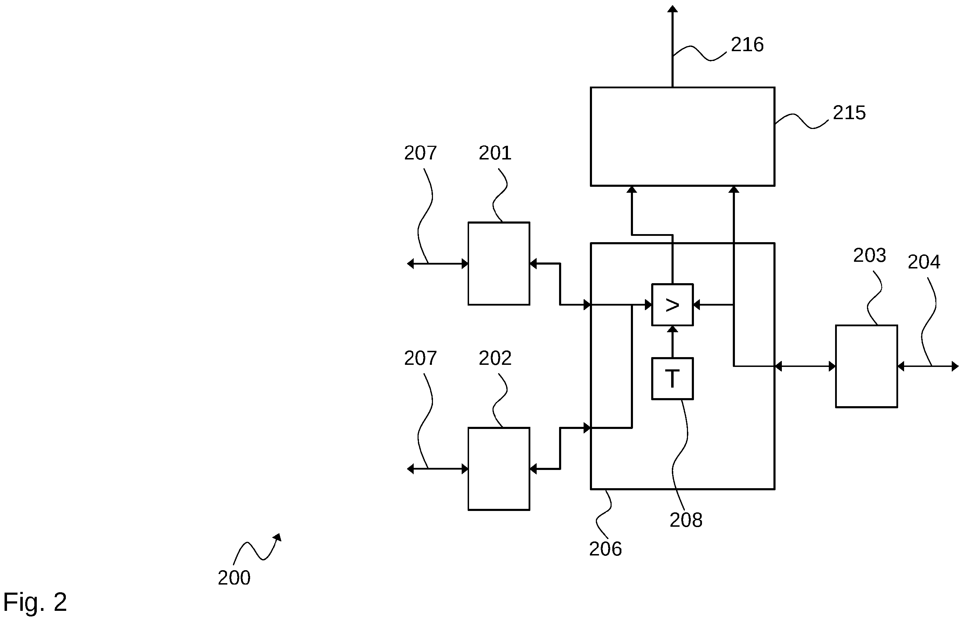

Figure 2 shows a block diagram of a measurement application control unit 200. The measurement application control unit 200 is based on the measurement application control unit 100. Therefore, the measurement application control unit 200 comprises a main database interface 201, a secondary database interface 202, and a text-based input interface 203. The main database interface 201, the secondary database interface 202, and the text-based input interface 203 are each coupled to a request processor 206. The main database interface 201 may couple to a main database that stores general knowledge data regarding the measurement applications. The secondary database interface 202 may couple to at least one secondary database that stores specific knowledge data regarding the measurement applications. The explanations provided herein for any one of the embodiments of the measurement application control unit also apply mutatis mutandis to the measurement application control unit 200.

The measurement application control unit 200 further comprises a pre-trained artificial-intelligence algorithm 215 that is coupled to the request processor 206. The request processor 206 may provide the text-based user request 204, and the retrieved database entries 207 to the pre-trained artificial-intelligence algorithm 215. The pre-trained artificial-intelligence algorithm 215 may then generate response data 216 regarding the text-based user request 204 based on the retrieved database entries 207.

In such embodiments, the information retrieved from the main database, and the secondary database may be used in a RAG pipeline to provide additional information to the pre-trained artificial-intelligence algorithm 215 for answering the user-provided text-based user request 204.

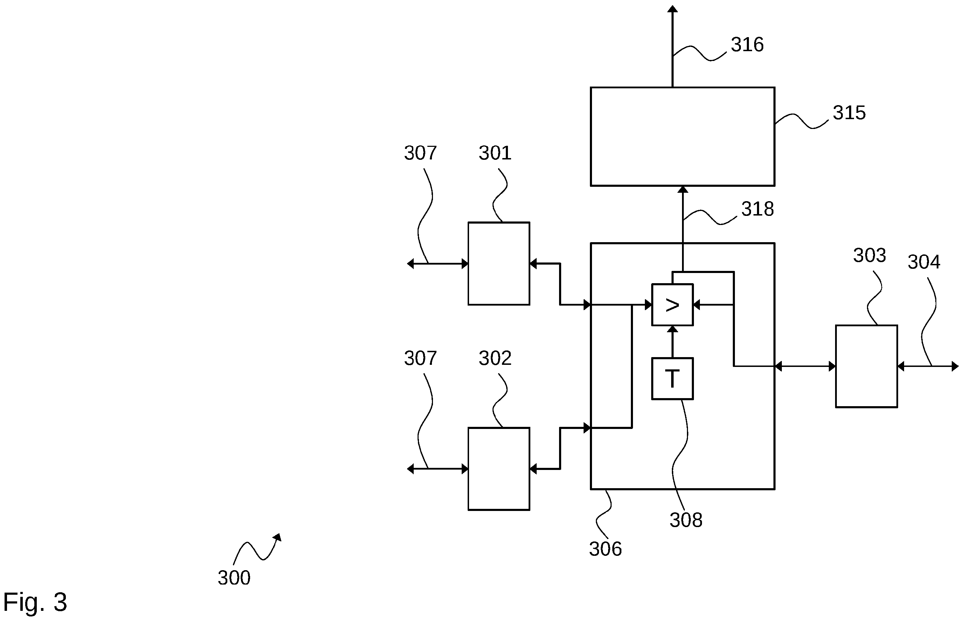

Figure 3 shows a block diagram of a measurement application control unit 300. The measurement application control unit 300 is based on the measurement application control unit 200. Therefore, the measurement application control unit 300 comprises a main database interface 301, a secondary database interface 302, and a text-based input interface 303. The main database interface 301, the secondary database interface 302, and the text-based input interface 303 are each coupled to a request processor 306. The main database interface 301 may couple to a main database that stores general knowledge data regarding the measurement applications. The secondary database interface 302 may couple to at least one secondary database that stores specific knowledge data regarding the measurement applications. The measurement application control unit 300 further comprises a pre-trained artificial-intelligence algorithm 315 that is coupled to the request processor 306. The explanations provided herein for any one of the embodiments of the measurement application control unit also apply mutatis mutandis to the measurement application control unit 300.

In contrast to the measurement application control unit 200, the request processor 306 does not provide the text-based user request 304, and the retrieved database entries 307 to the pre-trained artificial-intelligence algorithm 315. Instead, the request processor 306 generates a prompt 318 based on the database entries 307, and the text-based user request 304. The pre-trained artificial-intelligence algorithm 315 may then generate response data 316 regarding the text-based user request 304 based on the prompt.

In RAG-pipelines, a user-provided prompt, here the text-based user request 304, is not directly provided to an Al-based assistant or large language model, LLM. Instead, a specific prompt is generated from the text-based user request 304 and additional information. In the measurement application control unit 300, this additional information is represented by the database entries 307 that may be retrieved from the main database, and the at least one secondary database.

Such a prompt may include general information for the Al-based assistant, and may be enhanced by the text-based user request 304, and the database entries 307 that may be retrieved form the main database, and the at least one secondary database.

For example, a template string may be used, and the text-based user request 304, and the database entries 307 that may be retrieved form the main database, and the at least one secondary database may be added to that template string.

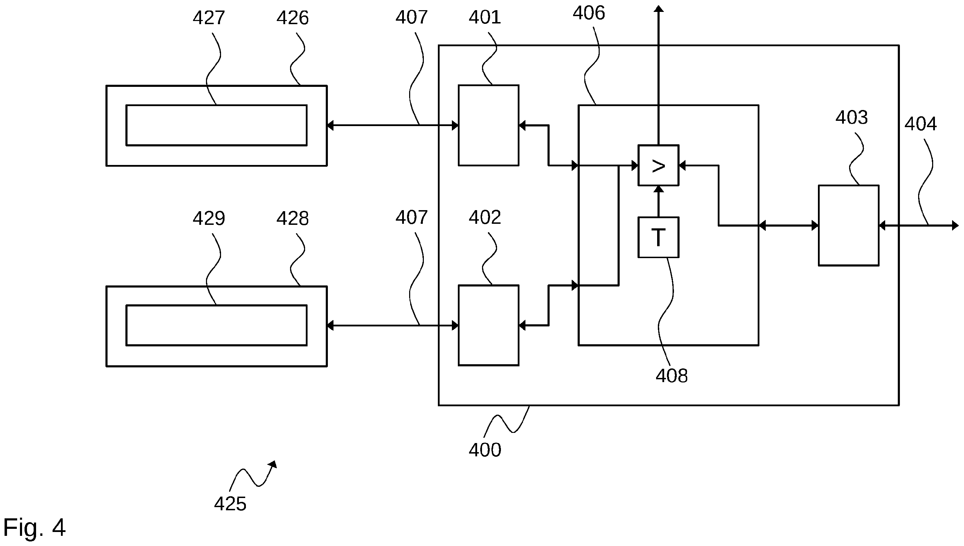

Figure 4 shows a block diagram of a measurement application system 425. The measurement application system 425 comprises a main database 426, and a secondary database 428 that are both coupled to a measurement application control unit 400, e.g., via a network connection. The main database 426, and the at least one secondary database 428 may each comprise a vector database.

The main database 426 stores general knowledge data 427 regarding possible measurement applications. The secondary database 428 stores specific knowledge data 429 regarding possible measurement applications. The measurement application control unit 400 may be embodied according to any one of the embodiments disclosed herein.

The measurement application control unit 400 is based on the measurement application control unit 100. It is understood, that the measurement application system 425 may be combined with any embodiment of the measurement application control unit disclosed herein. The explanations provided herein for any one of the embodiments of the measurement application control unit also apply mutatis mutandis to the measurement application control unit of the measurement application system 425.

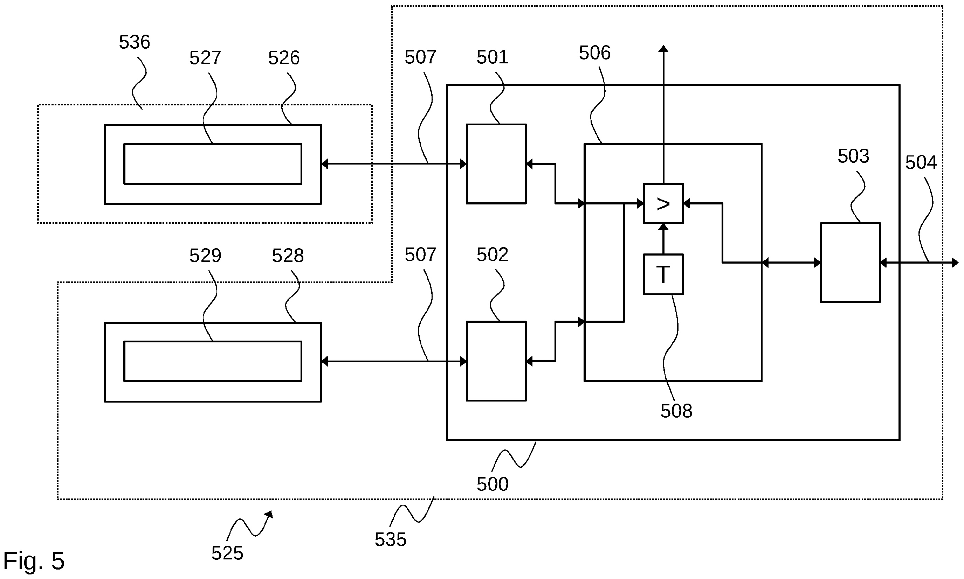

Figure 5 shows a block diagram of another measurement application system 525. The measurement application system 525 is based on the measurement application system 425. The measurement application system 525, therefore, comprises a main database 526, and a secondary database 528 that are both coupled to a measurement application control unit 500, e.g., via a network connection. The explanations provided herein for any one of the embodiments of the measurement application system also apply mutatis mutandis to the measurement application system 525.

The measurement application system 525 further comprises a private network segment 535, and a public network segment 536 that is coupled to the private network segment 535. The secondary database 528, and the measurement application control unit 500 are arranged in the private network segment 535. The main database 526 is arranged in the public network segment 536.

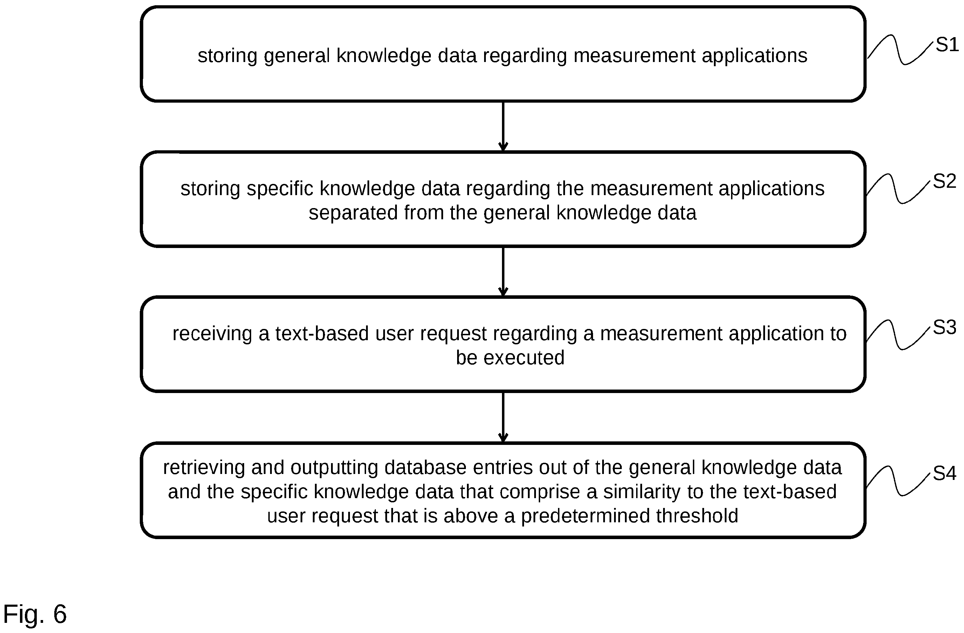

Figure 6 shows a flow diagram of a method for managing measurement application systems data. The method comprises storing S1 general knowledge data 427, 527 regarding measurement applications, storing S2 specific knowledge data 429, 529 regarding the measurement applications separated from the general knowledge data 427, 527, receiving S3 a text-based user request 104, 204, 304, 404, 504 regarding a measurement application to be executed, and retrieving S4 and outputting database entries 107, 207, 307, 407, 507 out of the general knowledge data 427, 527 and the specific knowledge data 429, 529 that comprise a similarity to the text-based user request 104, 204, 304, 404, 504 that is above a predetermined threshold 108, 208, 308, 408, 508.

The method may further comprise providing the text-based user request 104, 204, 304, 404, 504, and the retrieved database entries 107, 207, 307, 407, 507 to a pre-trained artificial-intelligence algorithm 215, 315, and generating response data 216, 316 regarding the text-based user request 104, 204, 304, 404, 504 based on the retrieved database entries 107, 207, 307, 407, 507 with the pre-trained artificial-intelligence algorithm 215, 315.

The method may further comprise generating a prompt 318 for the pre-trained artificial-intelligence algorithm 215, 315 based on the text-based user request 104, 204, 304, 404, 504 and the retrieved database entries 107, 207, 307, 407, 507.

Retrieving database entries 107, 207, 307, 407, 507 may comprises retrieving a predetermined number of database entries 107, 207, 307, 407, 507. Retrieving the predetermined number of database entries 107, 207, 307, 407, 507 may comprise retrieving as many database entries 107, 207, 307, 407, 507 as possible from the specific knowledge data 429, 529, and only retrieving database entries 107, 207, 307, 407, 507 from the general knowledge data 427, 527 if less than the predetermined number of database entries 107, 207, 307, 407, 507 is retrieved from the specific knowledge data 429, 529. Retrieving the predetermined number of database entries 107, 207, 307, 407, 507 may alternatively comprise equally retrieving database entries 107, 207, 307, 407, 507 from the general knowledge data 427, 527, and the specific knowledge data 429, 529. Retrieving the predetermined number of database entries 107, 207, 307, 407, 507 may alternatively further comprise retrieving a predetermined first number of database entries 107, 207, 307, 407, 507 from the specific knowledge data 429, 529, and a predetermined second number of database entries 107, 207, 307, 407, 507 from the general knowledge data 427, 527.

The predetermined threshold 108, 208, 308, 408, 508 may be lowered, and retrieving database entries 107, 207, 307, 407, 507 may be repeated if no database entries 107, 207, 307, 407, 507 are retrieved for a predetermined value of the threshold 108, 208, 308, 408, 508.

The specific knowledge data 429, 529 may be encrypted, and the method may further comprise decrypting the database entries 107, 207, 307, 407, 507 retrieved from the specific knowledge data 429, 529.

The general knowledge data 427, 527, and the specific knowledge data 429, 529 may each be stored in a dedicated vector database. Further, the general knowledge data 427, 527, and the specific knowledge data 429, 529 may each be stored in separate network segments.

The single method steps may be performed by or with the respective elements described herein as performing the respective function.

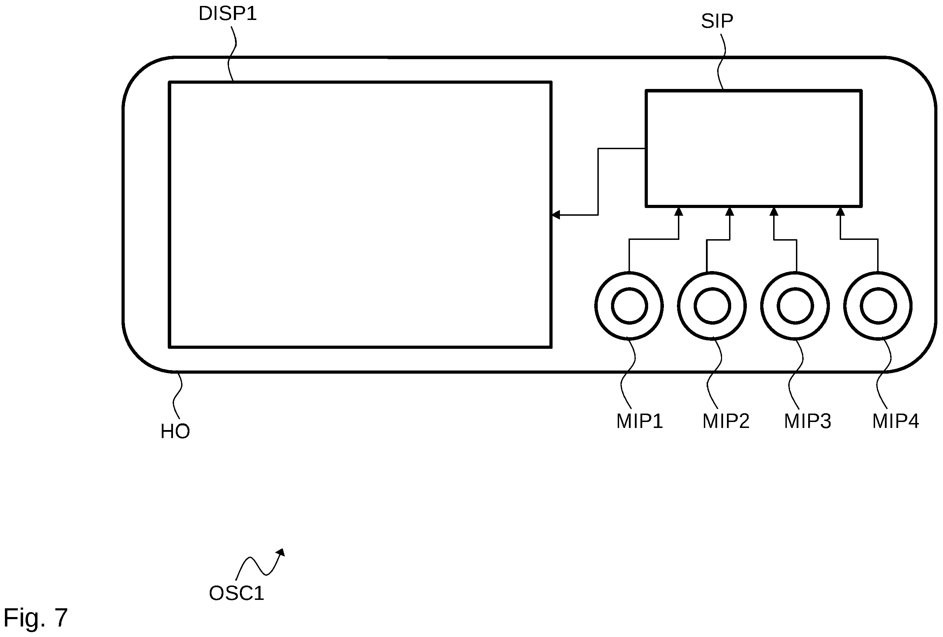

Figure 7 shows a block diagram of an oscilloscope OSC1 that may be used with an embodiment of a measurement application control unit, measurement application system, or method according to the present disclosure.

The oscilloscope OSC1 comprises a housing HO that accommodates four measurement inputs MIP1, MIP2, MIP3, MIP4 that are coupled to a signal processor SIP for processing any measured signals. The signal processor SIP is coupled to a display DISP1 for displaying the measured signals to a user.

Although not explicitly shown, it is understood, that the oscilloscope OSC1 may also comprise signal outputs. Such signal outputs may for example serve to output calibration signals. Such calibration signals allow calibrating the measurement setup prior to performing any measurement. The process of calibrating and correcting any measurement signals based on the calibration may also be called de-embedding and may comprise applying respective algorithms on the measured signals.

In the oscilloscope OSC1 the signal processor SIP or an additional processing element may e.g., perform the function of the measurement application control unit according to the present disclosure, or may implement the method according to the present disclosure. Of course, a communication interface may be provided in the oscilloscope OSC1 for communication with other measurement application devices.

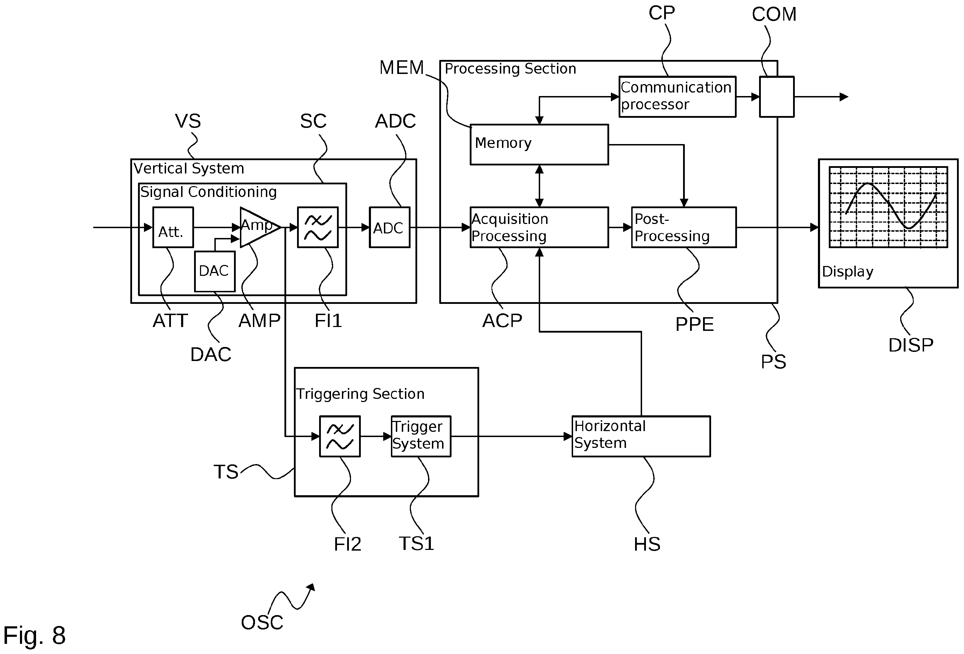

Figure 8 shows a block diagram of an oscilloscope OSC that may be an implementation of a measurement application device according to the present disclosure. The oscilloscope OSC is implemented as a digital oscilloscope. However, the present disclosure may also be implemented with any other type of oscilloscope.

The oscilloscope OSC exemplarily comprises five general sections, the vertical system VS, the triggering section TS, the horizontal system HS, the processing section PS and the display DISP. It is understood, that the partitioning into five general sections is a logical partitioning and does not limit the placement and implementation of any of the elements of the oscilloscope OSC in any way.

The vertical system VS mainly serves for offsetting, attenuating and amplifying a signal to be acquired. The signal may for example be modified to fit in the available space on the display DISP or to comprise a vertical size as configured by a user.

To this end, the vertical system VS comprises a signal conditioning section SC with an attenuatorATT and a digital-to-analog-converter DAC that are coupled to an amplifier AMP. The amplifier AMP is coupled to a filter FI1, which in the shown example is provided as a low pass filter. The vertical system VS also comprises an analog-to-digital converter ADC that receives the output from the filter FI1 and converts the received analog signal into a digital signal.

The attenuatorATT and the amplifier AMP serve to scale the amplitude of the signal to be acquired to match the operation range of the analog-to-digital converter ADC. The digital-to-analog-converter DAC serves to modify the DC component of the input signal to be acquired to match the operation range of the analog-to-digital converter ADC. The filter FI1 serves to filter out unwanted high frequency components of the signal to be acquired.

The triggering section TS operates on the signal as provided by the amplifier AMP. The triggering section TS comprises a filter FI2, which in this embodiment is implemented as a low pass filter. The filter FI2 is coupled to a trigger system TS1.

The triggering section TS serves to capture predefined signal events and allows the horizontal system HS to e.g., display a stable view of a repeating waveform, or to simply display waveform sections that comprise the respective signal event. It is understood, that the predefined signal event may be configured by a user via a user input of the oscilloscope OSC.

Possible predefined signal events may for example include, but are not limited to, when the signal crosses a predefined trigger threshold in a predefined direction i.e., with a rising or falling slope. Such a trigger condition is also called an edge trigger. Another trigger condition is called "glitch triggering" and triggers, when a pulse occurs in the signal to be acquired that has a width that is greater than or less than a predefined amount of time.

In order to allow an exact matching of the trigger event and the waveform that is shown on the display DISP, a common time base may be provided for the analog-to-digital converter ADC and the trigger system TS1.

It is understood, that although not explicitly shown, the trigger system TS1 may comprise at least one of configurable voltage comparators for setting the trigger threshold voltage, fixed voltage sources for setting the required slope, respective logic gates like e.g., a XOR gate, and FlipFlops to generate the triggering signal.

The triggering section TS is exemplarily provided as an analog trigger section. It is understood, that the oscilloscope OSC may also be provided with a digital triggering section. Such a digital triggering section will not operate on the analog signal as provided by the amplifier AMP but will operate on the digital signal as provided by the analog-to-digital converter ADC.

A digital triggering section may comprise a processing element, like a processor, a DSP, a CPLD, an ASIC or an FPGA to implement digital algorithms that detect a valid trigger event.

The horizontal system HS is coupled to the output of the trigger system TS1 and mainly serves to position and scale the signal to be acquired horizontally on the display DISP.

The oscilloscope OSC further comprises a processing section PS that implements digital signal processing and data storage for the oscilloscope OSC. The processing section PS comprises an acquisition processing element ACP that is couple to the output of the analog-to-digital converter ADC and the output of the horizontal system HS as well as to a memory MEM and a post processing element PPE.

The acquisition processing element ACP manages the acquisition of digital data from the analog-to-digital converter ADC and the storage of the data in the memory MEM. The acquisition processing element ACP may for example comprise a processing element with a digital interface to the analog-to-digital converter ADC2 and a digital interface to the memory MEM. The processing element may for example comprise a microcontroller, a DSP, a CPLD, an ASIC or an FPGA with respective interfaces. In a microcontroller or DSP, the functionality of the acquisition processing elementACP may be implemented as computer readable instructions that are executed by a CPU. In a CPLD or FPGA the functionality of the acquisition processing element ACP may be configured in to the CPLD or FPGA opposed to software being executed by a processor.

The processing section PS further comprises a communication processor CP and a communication interface COM.

The communication processor CP may be a device that manages data transfer to and from the oscilloscope OSC. The communication interface COM for any adequate communication standard like for example, Ethernet, WIFI, Bluetooth, NFC, an infra-red communication standard, and a visible-light communication standard.

The communication processor CP is coupled to the memory MEM and may use the memory MEM to store and retrieve data.

Of course, the communication processor CP may also be coupled to any other element of the oscilloscope OSC to retrieve device data or to provide device data that is received from the management server.

The post processing element PPE may be controlled by the acquisition processing element ACP and may access the memory MEM to retrieve data that is to be displayed on the display DISP. The post processing element PPE may condition the data stored in the memory MEM such that the display DISP may show the data e.g., as waveform to a user. The post processing element PPE may also realize analysis functions like cursors, waveform measurements, histograms, or math functions.

The display DISP controls all aspects of signal representation to a user, although not explicitly shown, may comprise any component that is required to receive data to be displayed and control a display device to display the data as required.

It is understood, that even if it is not shown, the oscilloscope OSC may also comprise a user interface for a user to interact with the oscilloscope OSC. Such a user interface may comprise dedicated input elements like for example knobs and switches. At least in part the user interface may also be provided as a touch sensitive display device.

In the oscilloscope OSC, any one of the processing elements in the processing section PS or an additional processing element may e.g., perform the function of the measurement application control unit according to the present disclosure, or may implement the method according to the present disclosure.

It is understood, that all elements of the oscilloscope OSC that perform digital data processing may be provided as dedicated elements. As alternative, at least some of the above-described functions may be implemented in a single hardware element, like for example a microcontroller, DSP, CPLD or FPGA. Generally, the above-describe logical functions may be implemented in any adequate hardware element of the oscilloscope OSC and not necessarily need to be partitioned into the different sections explained above.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

### LIST OF REFERENCE SIGNS

- 100, 200, 300, 400, 500: measurement application control unit
- 101, 201, 301, 401, 501: main database interface
- 102, 202, 302, 402, 502: secondary database interface
- 103, 203, 303, 403, 503: text-based input interface
- 104, 204, 304, 404, 504: text-based user request

- 106, 206, 306, 406, 506: request processor
- 107, 207, 307, 407, 507: database entries
- 108, 208, 308, 408, 508: threshold

- 215, 315: pre-trained artificial-intelligence algorithm
- 216, 316: response data

- 318: prompt

- 425, 525: measurement application system
- 426, 526: main database
- 427, 527: general knowledge data
- 428, 528: secondary database
- 429, 529: specific knowledge data

- 535: private network segment
- 536: public network segment

- S1 - S4: method steps

- OSC1: oscilloscope
- HO: housing
- MIP1, MIP2, MIP3, MIP4: measurement input
- SIP: signal processing
- DISP1: display

- OSC: oscilloscope
- VS: vertical system
- SC: signal conditioning
- ATT: attenuator
- DAC1: analog-to-digital converter
- AMP: amplifier
- FI1: filter
- DAC: digital-to-analog converter
- ADC: analog-to-digital converter

- TS: triggering section
- AMP2: amplifier
- FI2: filter
- TS1: trigger system

- HS: horizontal system

- PS: processing section
- ACP: acquisition processing element
- MEM: memory
- PPE: post processing element

- DISP: display

## Claims

1. A measurement application control unit (100, 200, 300, 400, 500) for measurement applications comprising:
a main database interface (101, 201, 301, 401, 501) configured to couple to a main database (426, 526), wherein the main database (426, 526) is configured to store general knowledge data (427, 527) regarding the measurement applications;
a secondary database interface (102, 202, 302, 402, 502) configured to couple to at least one secondary database (428, 528), wherein the at least one secondary database (428, 528) is configured to store specific knowledge data (429, 529) regarding the measurement applications;
a text-based input interface (103, 203, 303, 403, 503) configured to receive a text-based user request (104, 204, 304, 404, 504) regarding a measurement application to be executed;
a request processor (106, 206, 306, 406, 506) coupled to the main database interface (101, 201, 301, 401, 501), the secondary database interface (102, 202, 302, 402, 502), and the text-based input interface (103, 203, 303, 403, 503);
wherein the request processor (106, 206, 306, 406, 506) is configured to retrieve and
output database entries (107, 207, 307, 407, 507) from the main database (426, 526) and the at least one secondary database (428, 528) that comprise a similarity to the text-based user request (104, 204, 304, 404, 504) that is above a predetermined threshold (108, 208, 308, 408, 508).

2. The measurement application control unit (100, 200, 300, 400, 500) according to claim 1, further comprising a pre-trained artificial-intelligence algorithm (215, 315) coupled to the request processor (106, 206, 306, 406, 506);
wherein the request processor (106, 206, 306, 406, 506) is configured to provide the text-based user request (104, 204, 304, 404, 504), and the retrieved database entries (107, 207, 307, 407, 507) to the pre-trained artificial-intelligence algorithm (215, 315) ; and
wherein the pre-trained artificial-intelligence algorithm (215, 315) is configured to generate response data (216, 316) regarding the text-based user request (104, 204, 304, 404, 504) based on the retrieved database entries (107, 207, 307, 407, 507).

3. The measurement application control unit (100, 200, 300, 400, 500) according to claim 2, wherein the request processor (106, 206, 306, 406, 506) is configured to generate a prompt (318) for the pre-trained artificial-intelligence algorithm (215, 315) based on the text-based user request (104, 204, 304, 404, 504) and the retrieved database entries (107, 207, 307, 407, 507).

4. The measurement application control unit (100, 200, 300, 400, 500) according to any one of the preceding claims, wherein the request processor (106, 206, 306, 406, 506) is configured to retrieve a predetermined number of database entries (107, 207, 307, 407, 507); and
wherein when retrieving the predetermined number of database entries (107, 207, 307, 407, 507), the request processor (106, 206, 306, 406, 506) is configured to:
retrieve as many database entries (107, 207, 307, 407, 507) as possible from the at least one secondary database (428, 528), and only retrieve database entries (107, 207, 307, 407, 507) from the main database (426, 526) if less than the predetermined number of database entries (107, 207, 307, 407, 507) is retrieved from the at least one secondary database (428, 528); or
equally retrieve database entries (107, 207, 307, 407, 507) from the main database (426, 526), and the at least one secondary database (428, 528); or
retrieve a predetermined first number of database entries (107, 207, 307, 407, 507) from the at least one secondary database (428, 528), and a predetermined second number of database entries (107, 207, 307, 407, 507) from the main database (426, 526).

5. The measurement application control unit (100, 200, 300, 400, 500) according to any one of the preceding claims, wherein the request processor (106, 206, 306, 406, 506) is configured to lower the predetermined threshold (108, 208, 308, 408, 508) and repeat the retrieval of database entries (107, 207, 307, 407, 507) if no database entries (107, 207, 307, 407, 507) are retrieved for a predetermined value of the threshold (108, 208, 308, 408, 508).

6. The measurement application control unit (100, 200, 300, 400, 500) according to any one of the preceding claims, wherein the request processor (106, 206, 306, 406, 506) is further configured to decrypt the database entries (107, 207, 307, 407, 507) retrieved from the at least one secondary database (428, 528).

7. A measurement application system (425, 525) comprising:
a main database (426, 526) configured to store general knowledge data (427, 527) regarding the measurement applications;
a secondary database (428, 528) configured to store specific knowledge data (429, 529) regarding the measurement applications; and
a measurement application control unit (100, 200, 300, 400, 500) according to any one of the preceding claims, wherein the measurement application control unit (100, 200, 300, 400, 500) is coupled to the main database (426, 526), and the at least one secondary database (428, 528).

8. The measurement application system (425, 525) according to claim 7, wherein the main database (426, 526), and the at least one secondary database (428, 528) each comprise a vector database.

9. The measurement application system (425, 525) according to any one of the preceding claims 7 and 8, comprising a private network segment (535), and a public network segment (536) that is coupled to the private network segment (535);
wherein the at least one secondary database (428, 528), and the measurement application control unit (100, 200, 300, 400, 500) are arranged in the private network segment (535); and
wherein the main database (426, 526) is arranged in the public network segment (536).

10. A computer-implemented method for managing measurement application systems data, the method comprising:
storing (S1) general knowledge data (427, 527) regarding measurement applications;
storing (S2) specific knowledge data (429, 529) regarding the measurement applications separated from the general knowledge data (427, 527);
receiving (S3) a text-based user request (104, 204, 304, 404, 504) regarding a measurement application to be executed;
retrieving (S4) and outputting database entries (107, 207, 307, 407, 507) out of the general knowledge data (427, 527) and the specific knowledge data (429, 529) that comprise a similarity to the text-based user request (104, 204, 304, 404, 504) that is above a predetermined threshold (108, 208, 308, 408, 508).

11. The computer-implemented method according to claim 10, further comprising:
providing the text-based user request (104, 204, 304, 404, 504), and the retrieved database entries (107, 207, 307, 407, 507) to a pre-trained artificial-intelligence algorithm (215, 315); and
generating response data (216, 316) regarding the text-based user request (104, 204, 304, 404, 504) based on the retrieved database entries (107, 207, 307, 407, 507) with the pre-trained artificial-intelligence algorithm (215, 315).

12. The computer-implemented method according to claim 11, further comprising generating a prompt (318) for the pre-trained artificial-intelligence algorithm (215, 315) based on the text-based user request (104, 204, 304, 404, 504) and the retrieved database entries (107, 207, 307, 407, 507).

13. The computer-implemented method according to any one of the preceding method-based claims, wherein retrieving database entries (107, 207, 307, 407, 507) comprises retrieving a predetermined number of database entries (107, 207, 307, 407, 507); and
wherein retrieving the predetermined number of database entries (107, 207, 307, 407, 507) comprises:
retrieving as many database entries (107, 207, 307, 407, 507) as possible from the specific knowledge data (429, 529), and only retrieving database entries (107, 207, 307, 407, 507) from the general knowledge data (427, 527) if less than the predetermined number of database entries (107, 207, 307, 407, 507) is retrieved from the specific knowledge data (429, 529); or
equally retrieving database entries (107, 207, 307, 407, 507) from the general knowledge data (427, 527), and the specific knowledge data (429, 529); or
retrieving a predetermined first number of database entries (107, 207, 307, 407, 507) from the specific knowledge data (429, 529), and a predetermined second number of database entries (107, 207, 307, 407, 507) from the general knowledge data (427, 527).

14. The computer-implemented method according to any one of the preceding method-based claims, wherein the predetermined threshold (108, 208, 308, 408, 508) is lowered and retrieving of database entries (107, 207, 307, 407, 507) is repeated if no database entries (107, 207, 307, 407, 507) are retrieved for a predetermined value of the threshold (108, 208, 308, 408, 508).

15. The computer-implemented method according to any one of the preceding claims, wherein the specific knowledge data (429, 529) is encrypted, the method further comprising decrypting the database entries (107, 207, 307, 407, 507) retrieved from the specific knowledge data (429, 529).

16. The computer-implemented method according to any one of the preceding method-based claims, wherein the general knowledge data (427, 527), and the specific knowledge data (429, 529) are each stored in a dedicated vector database.
